# EUROPÄISCHE PATENTSCHRIFT

(11) **EP 1 966 400 B1**
(45) Veröffentlichungstag und Bekanntmachung des Hinweises auf die Patenterteilung: **09.12.2009**
(21) Anmeldenummer: 06830774.3
(22) Anmeldetag: 21.12.2006
(51) Int. Cl.: C22B 11/00, C22B 7/00, C22B 3/10, C01B 7/04, B01J 23/46, B01J 23/96

(54) **VERFAHREN ZUR WIEDERGEWINNUNG VON RUTHENIUM AUS GEBRAUCHTEN RUTHENIUMOXIDHALTIGEN KATALYSATOREN**
METHOD FOR THE RECOVERY OF RUTHENIUM FROM USED RUTHENIUM OXIDE-CONTAINING CATALYSTS
PROCÉDÉ DE RÉCUPÉRATION DU RUTHÉNIUM À PARTIR DE CATALYSEURS USAGÉS CONTENANT DE L'OXYDE DE RUTHÉNIUM

(30) Priorität: 23.12.2005 DE 102005061954
(43) Veröffentlichungstag der Anmeldung: 10.09.2008
(73) Patentinhaber: BASF SE, 67056 Ludwigshafen (DE)
(72) Erfinder: SCHUBERT, Olga, 67063 Ludwigshafen (DE); URTEL, Heiko, 68165 Mannheim (DE); HESSE, Michael, 67549 Worms (DE); SESING, Martin, 67165 Waldsee (DE); HOFMANN, Claus, 68199 Mannheim (DE); KRISTALIS, Iris, 64653 Lorsch (DE)
(86) Internationale Anmeldenummer: PCT/EP2006/070059
(87) Internationale Veröffentlichungsnummer: WO 2007/074129

(56) Entgegenhaltungen:
- EP-A- 0 304 231
- WO-A-01/10550
- DD-A1- 215 845
- DE-A1- 10 336 522
- GB-A- 1 046 313
- JP-A- 58 194 745
- JP-A- 2002 206 122
- DATABASE WPI Week 198511 Derwent Publications Ltd., London, GB; AN 1985-063987 XP002424639 & HU 33 984 A (BERKESI J) 28. Januar 1985 (1985-01-28)
- DATABASE WPI Week 197511 Derwent Publications Ltd., London, GB; AN 1975-18224W XP002424640 & JP 49 079394 A (MITSUBISHI METAL CORP) 31. Juli 1974 (1974-07-31)
- DATABASE WPI Week 200275 Derwent Publications Ltd., London, GB; AN 2002-694068 XP002424641 & JP 2002 194581 A (FURUYA KINZOKU KK) 10. Juli 2002 (2002-07-10)
- DATABASE WPI Week 200227 Derwent Publications Ltd., London, GB; AN 2002-210822 XP002424642 & JP 2001 321668 A (FURUYA KINZOKU KK) 20. November 2001 (2001-11-20)

## Beschreibung

Die Erfindung betrifft ein Verfahren zur Wiedergewinnung von Ruthenium aus gebrauchten Rutheniumoxid-haltigen Katalysatoren.

In dem von Deacon 1868 entwickelten Verfahren der katalytischen Chlorwasserstoff-Oxidation wird Chlorwasserstoff mit Sauerstoff in einer exothermen Gleichgewichtsreaktion zu Chlor oxidiert. EP-A 0 743 277 offenbart ein solches Verfahren der katalytischen Chlorwasserstoff-Oxidation, bei dem ein Ruthenium enthaltender Trägerkatalysator eingesetzt wird. Ruthenium wird dabei in Form von Rutheniumchlorid, Rutheniumoxichloriden, Chlorruthenat-Komplexen, Rutheniumhydroxid, Ruthenium-Amin-Komplexen oder in Form weiterer Ruthenium-Komplexe auf den Träger aufgebracht. Gemäß GB 1,046,313 wird in einem Verfahren der katalytischen Chlorwasserstoff-Oxidation als Katalysator Ruthenium(III)chlorid auf Aluminiumoxid eingesetzt.

Üblicherweise wird als Aluminiumoxidträger γ-Aluminiumoxid eingesetzt.

Gebrauchte Edelmetallkatalysatoren, welche Platingruppen-Metalle auf γ-Aluminiumoxid als Träger enthalten, werden in der Regel durch hydrometallurgische Verfahren behandelt, um die Edelmetalle wiederzugewinnen. Dabei wird der γ-AluminiumoxidTräger in Natronlauge oder Schwefelsäure aufgelöst, wobei das Edelmetall als ungelöster Rückstand verbleibt. Diese Art der Rückgewinnung erfordert einen geringen Kohlenstoffgehalt der gebrauchten Katalysatoren. Edelmetallkatalysatoren mit hohem Kohlenstoffgehalt sowie Katalysatoren, welche Edelmetalle auf unlöslichen Trägern wie α-Aluminiumoxid, Siliciumdioxid oder Zeolithen enthalten, werden in pyrometallurgischen Verfahren verarbeitet, um die Edelmetalle zurückzugewinnen. Bei pyrometallurgischen Prozessen wird der Katalysator bei Temperaturen von > 1300 °C in eine Schmelze überführt und nachfolgend in seine elementaren Bestandteile aufgetrennt. Siehe auch Hydrocarbon Engineering July 2003, Seiten 48-53, und Hydrocarbon Engineering March 2004, Seiten 31-36. Die Rückgewinnung von Edelmetallen aus gebrauchten, edelmetallhaltigen Katalysatoren durch pyrometallurgische Prozesse ist aufwändig und teuer.

Nachteilig an den Verfahren der katalytischen Chlorwasserstoff-Oxidation, die mit Katalysatoren auf Basis von γ-Aluminiumoxid arbeiten, ist die geringe mechanische Festigkeit der Katalysatoren. Diese hat einen hohen Abrieb und Feinstaubbildung zur Folge. Daher werden in neuester Zeit in der katalytischen Chlorwasserstoff-Oxidation auch Edelmetallkatalysatoren eingesetzt, welche Ruthenium auf α-Aluminiumoxid als Träger enthalten. Da α-Aluminiumoxid sowohl in Natronlauge als auch in Schwefelsäure unlöslich ist, scheidet die Rückgewinnung des Rutheniums aus den gebrauchten, α-Aluminiumoxid enthaltenden Katalysatoren durch hydrometallurgische Prozesse aus.

JP 03-013531 offenbart ein Verfahren zur Wiedergewinnung von Ruthenium aus Ruthenium oder Rutheniumoxid enthaltenden Rückständen. Dabei werden diese in der Hitze mit gasförmigem Chlor zu Rutheniumchlorid umgesetzt. Das flüchtige Rutheniumchlorid wird anschließend durch eine Bariumchlorid-Lösung geleitet und als wasserlösliches BaRuCl₅ aufgefangen.

JP 58-194745 offenbart ein Verfahren der Wiedergewinnung von Ruthenium, bei dem auf einem korrosionsfesten Träger vorliegende Rutheniumoxide zunächst zu metallischem Ruthenium reduziert und anschließend in lösliche Alkaliruthenate überführt werden.

JP 2002-206122 betrifft ein Verfahren, bei dem Ruthenium aus Ruthenium-haltigen Mischoxiden, welche weitere Metalle enthalten, wiedergewonnen wird. Das Ruthenium-haltige Mischoxid wird reduziert, wobei Ruthenium und die weiteren Metalle reduziert werden. Anschließend werden die weiteren, von Ruthenium verschiedenen Metalle durch Säurebehandlung aufgelöst, wobei Ruthenium als unlöslicher Rückstand verbleibt und durch Filtration gewonnen wird.

HU 33 984 A offenbart ein Verfahren zur Wiedergewinnung von Palladium und Ruthenium, bei dem die Metalle in konzentrierter Salzsäure in Gegenwart von Wasserstoffperoxid aufgelöst werden und anschließend elektrolytisch abgeschieden werden.

JP 49079394A offenbart ein Verfahren zur Wiedergewinnung von Platin aus Katalysatoren, die Platin auf Aluminiumoxid, Siliciumdioxid oder Graphit als Träger enthalten, wobei der platinhaltige Katalysator mit einer Lösung aus 30 %igem Wasserstoffperoxid und 1-12N HCl behandelt wird und das Platin dabei vollständig aufgelöst wird.

Aufgabe der Erfindung ist es, ein Verfahren zur Wiedergewinnung von Ruthenium aus Ruthenium-haltigen Katalysatoren, welche Ruthenium in oxidischer Form auf in Mineralsäuren schwer löslichen, keramischen Trägermaterialien enthalten, bereitzustellen. Das Verfahren soll einfach durchzuführen und kostengünstig sein.

Gelöst wird die Aufgabe durch ein Verfahren zur Wiedergewinnung von Ruthenium aus einem gebrauchten Ruthenium-haltigen Katalysator, der Ruthenium als Rutheniumoxid auf einem in Mineralsäure schwer löslichen Trägermaterial enthält, mit den Schritten:
a) der Rutheniumoxid enthaltende Katalysator wird in einem Wasserstoffstrom behandelt, wobei Rutheniumoxid zu metallischem Ruthenium reduziert wird;
b) der reduzierte Katalysator aus Schritt a) enthaltend metallisches Ruthenium auf dem schwer löslichen Trägermaterial wird mit Salzsäure mit einem Chlorwasserstoffgehalt von 20 - 37 Gew.-% in Gegenwart von Luft bei einer Temperatur von 60 bis 150 °C behandelt, wobei Luft in die Lösung eingeleitet wird, wobei das auf dem Träger vorliegende metallische Ruthenium als Ruthenium(III)chlorid gelöst und als wässrige Ruthenium(III)chlorid-Lösung gewonnen wird;
c) gegebenenfalls wird die Ruthenium(III)chlorid-Lösung aus Schritt b) weiter aufgearbeitet.

Geeignete schwer lösliche Trägermaterialien, welche nach dem erfindungsgemäßen Verfahren behandelt werden können, sind beispielsweise α-Aluminiumoxid, Siliciumdioxid, Titandioxid (Rutil- und Anatas-TiO₂, bevorzugt Rutil-TiO₂), Zirkondioxid, Zeolithe und Graphit. Bevorzugter Träger ist α-Aluminiumoxid.

Vorzugsweise wird das erfindungsgemäße Verfahren zur Wiedergewinnung von Ruthenium aus im Deacon-Verfahren eingesetzten, gebrauchten Ruthenium-haltigen Katalysatoren eingesetzt, welche als Träger α-Aluminiumoxid, gegebenenfalls im Gemisch mit weiteren Trägermaterialien, enthalten. Im Allgemeinen besteht der Träger im Wesentlichen aus α-Aluminiumoxid, kann aber weitere Trägermaterialien, beispielsweise Graphit, Siliciumdioxid, Titandioxid und/oder Zirkondioxid, bevorzugt Titandioxid und/oder Zirkondioxid, enthalten. Im Allgemeinen wird dieser Katalysator in der katalytischen Chlorwasserstoff-Oxidation bei einer Temperatur von oberhalb 200 °C, bevorzugt oberhalb von 350 °C, eingesetzt. Die Reaktionstemperatur beträgt dabei im Allgemeinen nicht mehr als 600 °C, vorzugsweise nicht mehr als 500 °C.

Die nach dem erfindungsgemäßen Verfahren aufgearbeiteten Ruthenium-haltigen Katalysatoren werden üblicherweise durch Tränkung des Trägermaterials mit wässrigen Lösungen von Rutheniumsalzen erhalten, wobei nach oder bevorzugt vor der Tränkung des Trägermaterials eine Formgebung des Katalysators erfolgt. Die Katalysatoren können auch als Wirbelschichtkatalysatoren in Form von Pulver mit mittleren Teilchengrößen von 10 bis 200 µm eingesetzt werden. Als Festbettkatalysatoren werden sie im Allgemeinen in Form von Katalysatorformkörpern eingesetzt. Üblicherweise werden die Formkörper oder Pulver nach dem Tränken bei Temperaturen von 100 bis 400 °C in Luft-. Stickstoff- oder Argonatmosphäre, bevorzugt in Luftatmosphäre getrocknet und anschließend calciniert. Bevorzugt werden die Formkörper oder Pulver zunächst bei 100 bis 150 °C getrocknet und anschließend bei 200 bis 400 °C calciniert. Beim Calcinieren bilden sich aus den Chloriden die Oxide.

Besonders vorteilhaft an dem erfindungsgemäßen Verfahren zur Rückgewinnung von Ruthenium aus Ruthenium-haltigen Trägerkatalysatoren ist die Tatsache, dass Ruthenium in Form einer wässrigen Ruthenium(III)chlorid-Lösung wiedergewonnen werden kann. Diese Ruthenium(III)chlorid-Lösung kann anschließend zur Neuherstellung von Katalysator eingesetzt werden, indem sie auf frisches Trägermaterial aufgebracht wird, gefolgt.von Trocknung und gegebenenfalls Calcinieren des imprägnierten Trägers.

Die Reduktion des Rutheniumoxid-haltigen Katalysators in Schritt a) erfolgt im Allgemeinen in einem Wasserstoffstrom bei erhöhter Temperatur, üblicherweise bei 50 bis 600 °C, bevorzugt bei 100 bis 300 °C, besonders bevorzugt bei 140 bis 250 °C, beispielsweise bei ca. 200 °C. Die Reduktion kann beispielsweise durch Überleiten von Wasserstoff über den gebrauchten Katalysator in einem Drehrohrofen erfolgen.

Die Oxidation von Ruthenium in Schritt b) erfolgt in konzentrierter Salzsäure mit einem Chlorwasserstoff-Gehalt von 20 bis 37 Gew.-%, beispielsweise ca. 32 Gew.-%. Die Oxidation erfolgt in Gegenwart von Luft. Dabei wird der metallisches Ruthenium enthaltende, schwer lösliche Träger in einem Autoklaven mit konzentrierter Salzsäure vorgelegt werden und in diese Lösung Luft eingeleitet. Um das Lösungsvolumen zu begrenzen, kann zusätzlich gasförmiger Chlorwasserstoff eingeleitet werden. Das Auflösen des metallischen Rutheniums erfolgt bei erhöhter Temperatur von 60 bis 150 °C, beispielsweise bei ca. 100 °C.

Die erhaltene, Ruthenium(III)chlorid enthaltende wässrige Lösung kann gegebenenfalls weitere Metalle in Form ihrer Chloride enthalten. Diese weiteren Metalle können aus dem Reaktormaterial stammen und durch Abrieb in den Katalysator gelangt sein (beispielsweise Nickel aus Nickel-haltigen Stählen) oder in dem Ruthenium-haltigen Katalysator neben Ruthenium als weitere Aktivmetalle enthalten gewesen sein. So kann der Ruthenium-haltige Katalysator beispielsweise weitere Edelmetalle, ausgewählt aus Palladium, Platin, Osmium, Iridium, Kupfer, Silber, Gold oder Rhenium, enthalten. Diese weiteren Metalle können in einem optionalen Aufarbeitungsschritt c) nach üblichen Methoden teilweise oder vollständig abgetrennt werden. Geeignete Verfahren sind in Beck, Edelmetall-Taschenbuch, 2. Auflage, Heidelberg: Hüthig 1995, sowie Winnacker-Küchler, Chemische Technologie, 4. Auflage, Band 4, Seiten 540 bis 572 beschrieben.

Die Erfindung wird durch das nachstehende Beispiel näher erläutert.

### Beispiel

300 g eines gebrauchten Katalysators, welcher 2 Gew.-% RuO₂ auf α-Aluminiumoxid als Träger enthält, wurde in einem Drehrohrofen bei 200 °C im Wasserstoffstrom 3 Stunden reduziert. Dabei wurde der Katalysator zunächst im Stickstoffstrom auf 200 °C aufgeheizt, dann wurde der N₂/H₂-Strom (5 : 1) 1 h lang und anschließend in reinem H₂ 3 h lang reduziert. Der reduzierte Katalysator wurde unter Stickstoffatmosphäre in ein mit Stickstoff begastes Gefäß abgefüllt. Anschließend wurde der reduzierte Katalysator unter Stickstoffatmosphäre in eine 2000 ml-Rührapparatur überführt und es wurden 1160 g 32 gew.-%ige Salzsäure zugegeben. Unter Rühren und Stickstoffbegasung wurde auf 100 °C hochgeheizt. Anschließend wurde 24 Stunden bei 100 °C gerührt, wobei 50 l/h Luft in die Lösung eingeperlt wurde. Es wurde eine dunkelrote Rutheniumchlorid-Lösung erhalten, die von dem Rückstand abdekantiert wurde. Der als Rückstand verbliebene Träger wurde mit ca. 1 l Wasser neutral gewaschen. Anschließend wurde der Träger 16 Stunden lang bei 120 °C getrocknet und der Rutheniumgehalt des Trägers bestimmt. Die Bestimmung ergab einen Rutheniumgehalt von 0,20 Gew.-%. Im Vergleich dazu enthielt der gebrauchte Katalysator 1,49 Gew.-% Ruthenium. Somit verblieben auf dem Träger ca. 13% des ursprünglich enthaltenen Rutheniums.

## Patentansprüche

1. Verfahren zur Wiedergewinnung von Ruthenium aus einem gebrauchten Ruthenium-haltigen Katalysator, der Ruthenium als Rutheniumoxid auf einem in Mineralsäure schwer löslichen Trägermaterial enthält, mit den Schritten:
a) Der Rutheniumoxid enthaltende Katalysator wird in einem Wasserstoffstrom behandelt, wobei das auf dem Träger vorliegende Rutheniumoxid zu metallischem Ruthenium reduziert wird;
b) der reduzierte Katalysator aus Schritt a) enthaltend metallisches Ruthenium auf dem Trägermaterial wird mit Salzsäure mit einem Chlorwasserstoffgehalt von 20 - 37 Gew.-% in Gegenwart von Luft bei einer Temperatur von 60 bis 150 °C behandelt, wobei Luft in die Lösung eingeleitet wird, wobei das auf dem Träger vorliegende metallische Ruthenium als Ruthenium(III)chlorid gelöst wird und so als Ruthenium(III)chlorid-Lösung gewonnen wird;
c) gegebenenfalls wird die Ruthenium(III)chlorid-Lösung aus Schritt b) weiter aufgearbeitet.

2. Verfahren nach Anspruch 1, **dadurch gekennzeichnet, dass** das schwer lösliche Trägermaterial α-Aluminiumoxid enthält.

3. Verfahren nach Anspruch 1 oder 2, **dadurch gekennzeichnet, dass** der Ruthenium-haltige Katalysator hergestellt wird durch Imprägnieren des schwer löslichen Trägers mit Ruthenium(III)chlorid-Lösung, Trocknen und Calcinieren.

4. Verfahren nach Anspruch 3, **dadurch gekennzeichnet, dass** die in Schritt b) oder c) erhaltene Ruthenium(III)chlorid-Lösung zur Herstellung von neuem Katalysator eingesetzt wird.

5. Verfahren nach einem der Ansprüche 1 bis 4, **dadurch gekennzeichnet, dass** der Ruthenium-haltige Katalysator in der Chlorwasserstoff-Oxidation eingesetzt wird.

## Claims

1. A process for recovering ruthenium from a used ruthenium-comprising catalyst which comprises ruthenium as ruthenium oxide on a support material which is sparingly soluble in mineral acid, which comprises the steps:
a) the catalyst comprising ruthenium oxide is treated in a stream of hydrogen, with ruthenium oxide present on the support being reduced to metallic ruthenium;
b) the reduced catalyst from step a) comprising metallic ruthenium on the support material is treated with hydrochloric acid having a hydrogen chloride content of from 20 to 37% by weight in the presence of air at a temperature of from 60 to 150°C, with air being passed into the solution and the metallic ruthenium present on the support being dissolved as ruthenium(III) chloride and being obtained as ruthenium(III) chloride solution;
c) if appropriate, the ruthenium(III) chloride solution from step b) is worked up further.

2. The process according to claim 1, wherein the sparingly soluble support material comprises α-aluminum oxide.

3. The process according to claim 1 or 2, wherein the ruthenium-comprising catalyst is produced by impregnation of the sparingly soluble support with ruthenium(III) chloride solution, drying and calcination.

4. The process according to claim 3, wherein the ruthenium(III) chloride solution obtained in step b) or c) is used for producing fresh catalyst.

5. The process according to any of claims 1 to 4, wherein the ruthenium-comprising catalyst is used in the oxidation of hydrogen chloride.

## Revendications

1. Procédé pour la récupération de ruthénium d'un catalyseur usagé contenant du ruthénium, qui contient le ruthénium sous forme d'oxyde de ruthénium sur un matériau support peu soluble dans un acide minéral, présentant les étapes :
a) le catalyseur contenant l'oxyde de ruthénium est traité dans un flux d'hydrogène, où l'oxyde de ruthénium se trouvant sur le support est réduit en ruthénium métallique ;
b) le catalyseur réduit de l'étape a) contenant du ruthénium métallique sur le matériau support est traité avec de l'acide chlorhydrique présentant une teneur en chlorure d'hydrogène de 20-37% en poids en présence d'air à une température de 60 à 150°C, où l'air est introduit dans la solution, le ruthénium métallique se trouvant sur le support étant dissous sous forme de chlorure de ruthénium (III) et ainsi obtenu sous forme de solution de chlorure de ruthénium (III) ;
c) le cas échéant la solution de chlorure de ruthénium (III) de l'étape b) est traitée davantage.

2. Procédé selon la revendication 1, **caractérisé en ce que** le matériau support peu soluble contient de l'α-oxyde d'aluminium.

3. Procédé selon la revendication 1 ou 2,
**caractérisé en ce que** le catalyseur contenant du ruthénium est préparé par imprégnation du support peu soluble avec une solution de chlorure de ruthénium (III), séchage et calcination.

4. Procédé selon la revendication 3, **caractérisé en ce que** la solution de chlorure de ruthénium (III) obtenue dans l'étape b) ou c) est utilisée pour la préparation de nouveau catalyseur.

5. Procédé selon l'une quelconque des revendications 1 à 4, **caractérisé en ce que** le catalyseur contenant du ruthénium est utilisé dans l'oxydation de chlorure d'hydrogène.
